# EUROPÄISCHE PATENTSCHRIFT

(11) **EP 3 174 927 B1**
(45) Veröffentlichungstag und Bekanntmachung des Hinweises auf die Patenterteilung: **29.01.2020**
(21) Anmeldenummer: 15784272.5
(22) Anmeldetag: 28.07.2015
(51) Int. Cl.: C08K 5/09, C09J 103/02

(54) **KLEBSTOFFZUSAMMENSETZUNG**
GLUE COMPOSITIONS
COMPOSITIONS DE COLLE

(30) Priorität: 30.07.2014 DE 102014110794
(43) Veröffentlichungstag der Anmeldung: 07.06.2017
(73) Patentinhaber: UHU GmbH & Co. KG, 77815 Bühl (Baden) (DE)
(72) Erfinder: LIAR, Aurelia, 77855 Achern (DE)
(74) Vertreter: advotec.
(86) Internationale Anmeldenummer: PCT/DE2015/100318
(87) Internationale Veröffentlichungsnummer: WO 2016/015717

(56) Entgegenhaltungen:
- WO-A1-2014/110357
- DE-A1- 4 125 122

## Beschreibung

Die vorliegende Erfindung betrifft eine Klebstoffzusammensetzung sowie einen Klebestift, welcher eine erfindungsgemäße Klebstoffzusammensetzung enthält. Klebestifte sind seit langer Zeit bekannt und finden ihren Einsatz insbesondere bei der Verklebung von Papier, Pappe, Fotos und anderen üblichen Materialien. Die bekannten Klebestifte enthalten meist wässrige Zubereitungen aus einer Klebwirksubstanz, wie beispielsweise Polyvinylpyrrolidon, wässrige Polyacrylate, Polyvinylalkohole und Abmischungen in Kombination mit gerüstbildenden Inhaltsstoffen, wie beispielsweise Fettsäuren, die in Form eines Seifengels dem Klebestift die formgebende Konsistenz verleihen. Es sind auch Klebestifte auf Stärkebasis bekannt, bei denen die Klebwirksubstanz in erster Linie Stärke ist. Als Weichmacher wird den Klebestiften oft Propylenglycol beigemengt.

Ziel der vorliegenden Erfindung ist es, eine Klebstoffzusammensetzung bzw. einen Klebestift zur Verfügung zu stellen, der zum einen exzellente Klebeeigenschaften aufweist und zum anderen möglichst umwelt- und gesundheitsfreundlich ist.

Diese Aufgabe wird gelöst durch eine Klebstoffzusammensetzung, welche dadurch gekennzeichnet ist, dass sie einen Anteil an Wasser, Stärke und/oder Stärkederivaten, Glycerin und mindestens einer Fettsäure und/oder eines Salzes einer Fettsäure von mindestens 98 Gew.-% aufweist, wobei der Anteil an nicht verdampfbaren Bestandteilen, nämlich der Anteil an Stärke und/oder Stärkederivaten, Fettsäure und/oder Fettsäuresalz und Glycerin ca. 40 Gew.-% beträgt.

Es hat sich überraschenderweise herausgestellt, dass eine Klebstoffzusammensetzung mit einem Anteil von mindestens 98 Gew.-% an Wasser, Stärke und/oder Stärkederivaten, Glycerin und Fettsäure bzw. Fettsäuresalz exzellente Klebeeigenschaften zeigt. Gleichzeitig sind diese Bestandteile natürliche Bestandteile, welche ökologisch völlig unbedenklich sind. Zudem handelt es sich bei den Bestandteilen Wasser, Stärke, Glycerin und Fettsäure größtenteils um Nahrungsmittel, welche allesamt für den menschlichen Körper völlig unbedenklich sind. In der Regel wird Glycerin pflanzlichen Ursprungs eingesetzt.

Eine besonders bevorzugte Ausfuhrungsform der erfindungsgemäßen Klebstoffzusammensetzung ist im Wesentlichen frei von organischen Lösungsmitteln, insbesondere frei von Lösungsmitteln mit einem Siedepunkt von unter 200 °C. Es hat sich herausgestellt, dass auf derartige Lösungsmittel bei der erfindungsgemäßen Klebstoffzusammensetzung völlig verzichtet werden kann. Im Gegensatz hierzu weisen die Klebstoffzusammensetzungen aus dem Stand der Technik in der Regel zumindest gewisse Mengen an derartigen Lösungsmitteln auf. Solche Lösungsmittel sind in der Regel jedoch ökologisch und für die menschliche Gesundheit bedenklich. Zudem haben derartige Lösungsmittel häufig einen unangenehmen, stechenden Geruch.

Mit Vorteil ist die erfindungsgemäße Klebstoffzusammensetzung frei von Polyvinylpyrrolidon, Propylenglycol und Caprolactam. Diese Verbindungen sind teils in vielen Klebstoffzusammensetzungen zu finden und sind ökologisch und gesundheitlich bedenklich.

Eine bevorzugte Ausführungsform der erfindungsgemäßen Klebstoffzusammensetzung enthält Wasser mit einem Anteil von 60 Gew.-%, Stärke und/oder Stärkederivate mit einem Anteil von 10 - 40 Gew.-%, Glycerin mit einem Anteil von 1 - 20 Gew.-% und Fettsäure und/oder Salz einer Fettsäure mit einem Anteil von 2 - 20 Gew.-%. Eine besonders vorteilhafte Variante der erfindungsgemäßen Klebstoffzusammensetzung enthält Wasser mit einem Anteil von 60 Gew.-%, Stärke und/oder Stärkederivate mit einem Anteil von 20 - 25 Gew.-%, insbesondere von 23 Gew.-%, Glycerin mit einem Anteil von 5 - 15 Gew.-%, insbesondere von 10 Gew.-% und Fettsäure und/oder Salz einer Fettsäure mit einem Anteil von 2 - 8 Gew.-%, insbesondere von 5 Gew.-%. Die vorstehend genannten Anteilsverhältnisse an Wasser, Stärke, Glycerin und Fettsäure weisen besonders vorteilhafte Eigenschaften, insbesondere hinsichtlich der Klebeeigenschaften auf.

Vorzugsweise enthält die erfindungsgemäße Klebstoffzusammensetzung als Stärke Kartoffel- und/oder Maisstärke. Diese Stärkesorten sind hinsichtlich Ökologie und Gesundheit besonders vorteilhaft und sind zudem günstige Rohstoffe.

Die in der EU produzierten Stärken werden zu 40 bis 50 % für industrielle Anwendungen (Hauptanteil wird in der Papier- und Wellpappenproduktion eingesetzt) verwendet. Ein kontrollierter Anbau, auf speziell ausgewiesenen Anbauflächen, ist sichergestellt. Außerdem wird eine gleichbleibende Qualität und keine gentechnische Veränderung der Pflanze garantiert. Durch den Anbau und Bezug innerhalb Europas werden Umweltforderungen und soziale Kompetenz jederzeit garantiert. Außerdem ist der Transport im Vergleich zu anderen Stärketypen wie z. B. Reis, Tapioka oder Maniok sehr kurz, was ebenfalls positiv zu erwähnen ist. Stärke als nachwachsender Rohstoff ist nachhaltig und ökologisch sowie ökonomisch im Vergleich zu erdölbasierten Rohstoffen wie z. B. Polyvinylpyrrolidon besonders vorteilhaft.

Die erfindungsgemäße Klebstoffzusammensetzung kann auch Dextrine und/oder stärkebasierende Zuckerstoffe enthalten. Zudem können auch kleine Mengen an sonstigen Additiven, wie Weißmacher, Bleichmittel und Füllstoffe enthalten sein.

Mit Vorteil ist die mindestens eine Fettsäure eine C₁₄- oder C₁₆-Fettsäure. Diese Fettsäuren zeigen besonders vorteilhafte Eigenschaften in der erfindungsgemäßen Klebstoffzusammensetzung, insbesondere hinsichtlich Gerüstbildung und Klebeeigenschaften.

Die mindestens eine Fettsäure der erfindungsgemäßen Klebstoffzusammensetzung wird vorzugsweise auf pflanzlicher Basis, insbesondere aus Rapsöl, Sonnenblumenöl, Leinöl, Senföl, Olivenöl, Erdnussöl, Palmöl, Palmkernöl, Traubenkernöl, Kürbiskernöl, Sojaöl, Kokosöl, Avocadoöl, Mandelöl, Distelöl, Rizinusöl und/oder Thymianöl gewonnen. Diese Öle sind allesamt ökologisch völlig unbedenklich.

Die genannten Öle/Fettsäuren können neben ihrer Funktion als Gerüstbildner auch Weichmacherfunktionen zusammen mit Glycerin erfüllen.

Mit Vorteil enthält die erfindungsgemäße Klebstoffzusammensetzung mindestens eines aus der Gruppe von Parfümölen, insbesondere Parfümöle aus Blüten, Früchten, Hölzern und/oder Gewürzen, Naturfarbstoffen, insbesondere Naturfarbstoffe aus Pflanzen, und natürlichen Konservierungsstoffen, insbesondere Ascorbinsäure und/oder ätherische Öle. All diese Substanzen sind natürliche, ökologisch völlig unbedenkliche Verbindungen.

Eine weitere bevorzugte Ausführungsform der erfindungsgemäßen Klebstoffzusammensetzung enthält mindestens einen pH-Indikator, vorzugsweise mit einem Anteil von weniger als 0,1 Gew.-%. Dieser Indikator weist vorzugsweise einen Umschlagsbereich zwischen pH 7 bis 9 auf. Ein Beispiel eines derartigen pH-Indikators ist Thymolphthalein. Klebstoffzusammensetzungen mit einem derartigen pH-Indikator zeigen in einfacher Art und Weise durch eine bestimmte Farbe den pH-Wert der Klebstoffzusammensetzung an. Der praktische Vorteil derartiger pH-Indikatoren liegt z. B. darin, dass durch die Farbe des Klebstoffes beim Auftragen (z. B. blau bei Thymolphthalein) visuell ersichtlich ist, wo Klebstoff aufgetragen wurde, z. B. ob in Eckbereichen Klebstoff appliziert wurde. Auch Kinder können spielerisch das sachgemäße Kleben erlernen. Zudem wird Menschen mit Sehschwäche das Kleben erleichtert. Der Vorteil dieser pH-Indikatoren, z. B. Thymolphthalein besteht auch darin, dass die Farbe durch Reaktion mit CO₂ aus der Luft wenige Sekunden nach dem Auftragen des Klebstoffes wieder verschwindet.

Eine bevorzugte Ausführungsform der erfindungsgemäßen Klebstoffzusammensetzung ist dadurch gekennzeichnet, dass der Anteil an nicht verdampfbaren Bestandteilen aus nahezu 100 % natürlichen Inhaltsstoffen, insbesondere aus Stärke und/oder Stärkederivaten, Fettsäure und/oder Fettsäuresalz und Glycerin besteht. Bezogen auf die gesamte Klebstoffzusammensetzung beträgt dieser Anteil ca. 40 Gew.-%. Derartige Klebstoffzusammensetzungen haben besonders vorteilhafte Eigenschaften (siehe Vergleichsversuche).

Die vorliegende Erfindung betrifft ferner einen Klebestift, enthaltend eine erfindungsgemäße Klebstoffzusammensetzung.

Eine erfindungsgemäße Klebstoffzusammensetzung kann wie folgt hergestellt werden:
Erwärmtes Wasser wird vorgelegt und bei Bedarf konserviert. Danach wird unter Rühren Glycerin zugegeben. Nach Zugabe des Glycerins wird Stärke unter Flüssigkeitsspiegel mittels Vakuum aus einem Vorlagebehälter hinzugegeben. Danach erfolgt ebenfalls unter Flüssigkeitsspiegel und Vakuum die Zugabe von Fettsäure aus einem Vorlagebehälter. Bei einer Temperatur von ca. 70 °C wird die Mischung alkalisiert. Unter Vakuum wird die Mischung einige Minuten gerührt. Bei Bedarf werden am Ende unter Rühren Hilfsstoffe, wie beispielsweise Parfüm, hinzugegeben. Die Endtemperatur beträgt 75 - 85 °C. Nach dem Abkühlen erstarrt die so hergestellte Klebstoffzusammensetzung.

### Vergleichsversuche:

Verglichen wird eine Klebstoffzusammensetzung aus dem Stand der Technik (Vergleichszusammensetzung) mit folgender Zusammensetzung:
57 Gew.-% Wasser, 23 Gew.-% Polyvinylpyrrolidon, 14 Gew.-% Glycerin, 5 Gew.-% Gerüstbildner und 1 Gew.-% Natriumhydroxid.

Zum Vergleich wird eine erfindungsgemäße Klebstoffzusammensetzung mit folgender Zusammensetzung getestet:
60 Gew.-% Wasser, 23 Gew.-% Stärke, 10 Gew.-% Glycerin, 5 Gew.-% Fettsäure und 1 Gew.-% Natriumhydroxid.

### Folgende Versuche wurden durchgeführt:

### 1. Bestimmung der Penetration von Klebstiften

### Versuchsbeschreibung:

Es wird die Eindringtiefe eines Stahlstiftes in die Klebemasse bestimmt. Der Klebstift wird 24h bei 20 °C / 65 % r.F. temperiert. Am Penetrometer wird eine definierte Eindringzeit eingestellt. Der Klebestift wird aus der Hülse herausgedreht und in die Vorrichtung eingelegt. Der Detektor wird mit der Probe in Kontakt gebracht. Der Stahlstift wird so weit abgesenkt, dass dessen Spitze die Oberfläche der Probe berührt.

Danach wird der Fallstab ausgelöst. Nach jeder Messung wird der Fallstab wieder in Startposition gebracht, dabei wird der Wert auf O gesetzt.

### Auswertung:

Pro Stift werden 6 Bestimmungen durchgeführt und der Mittelwert in mm gebildet.

| | | **Vergleichszusammensetzung** | **erfindungsgemäße Formulierung** |
|---|---|---|---|
| **Bsp.:** | [mm] | 2,2 | 2,6 |

### 2. Transfer von Klebestiften mit maschineller Prüfeinrichtung

Es wird der Gewichtsverlust ermittelt, welcher durch maschinelles Abfahren der Klebemasse über eine Papierbahn definierter Länge unter konstanter Belastung erfolgt.

Die Prüfung wird unter konstanten Prüfbedingungen durchgeführt. Der Klebestift wird dazu für 24h bei 20 °C / 65 % r.F. konditioniert. Die Papierbahn wird in die Prüfvorrichtung eingespannt. Der Klebestift wird ca. 0,5 cm herausgedreht und mit einem Messer abgeschnitten. Damit wird gewährleistet, dass der Klebestift eine glatte Oberfläche hat und vollflächig auf dem Papier aufliegt. Vor der Prüfung wird der Klebestift gewogen. Danach wird der Klebestift in die Vorrichtung des Fahrwagens montiert und die Masse erneut um eine definierte Länge aus der Hülse gedreht. Das entsprechende Prüfprogramm wird ausgewählt und die Prüfung gestartet. Von einer Linearachse geführt, fährt der Klebestift mit konstanter Geschwindigkeit und konstanter Gewichtsbelastung einen definierten Weg über die Papierbahn. Die Wegelänge beträgt z. B. 1 m. Der Klebestift wird vorsichtig aus der Vorrichtung entnommen und zurückgewogen.

### Auswertung:

Der Vorgang wird insgesamt 5x durchgeführt. Aus den Werten wird der Mittelwert gebildet. Das Ergebnis wird in mg/m angegeben.

Wenn sich während der Messung Klebstoffklümpchen am Hülsenrand bilden, werden diese wie folgt berücksichtigt. Die überstehenden Klebstoffpartikel werden nach dem Zurückwiegen vom Klebestift vorsichtig entfernt und dieser nochmals gewogen.

| | | **Vergleichszusammensetzung** | **erfindungsgemäße Formulierung** |
|---|---|---|---|
| **Bsp.:** | [mg/m] | 80-90 | 100 |

### 3. Manuelle Papieranzugswerte mit Klebestiften

### Versuchsdurchführung:

Es wird die Zeitspanne zwischen Klebemasseauftrag und Papierriss ermittelt. Die Klebstoffmasse wird ca. 0,5 cm herausgedreht und mit einem Messer abgeschnitten, um eine glatte Oberfläche zu erhalten. Auf einem definierten Prüfstreifen wird mittig 1x und/oder 3x von links nach rechts Klebemasse aufgetragen und ein zweiter Prüfstreifen deckungsgleich durch Fingerdruck angepresst. Sofort wird eine Stoppuhr betätigt. Nun werden die Prüfstreifen gleichmäßig bis zum Papierriss auseinander gezogen und die Zeit bestimmt.

### Auswertung:

Die Prüfung wird 4-mal wiederholt und der Mittelwert [sec] gebildet.

| | | | **Vergleichszusammensetzung** | **erfindungsgemäße Formulierung** |
|---|---|---|---|---|
| **Bsp.:** | [sec] | 1x | 35 | 20 |
| | | 3x | 30 | 15 |

### 4. Prüfung der Schäl- und Zugscherfestigkeit von Klebestiften

### Schälfestigkeit:

### Versuchsbeschreibung:

Es wird die Schälfestigkeit von Klebestiften bei Verklebungen von Papier mit Papier (z.B. Kopierpapier) geprüft. Ein Papierstreifen (definierte Qualität) wird fixiert. Die maschinelle Prüfvorrichtung dient zum definierten Klebstoffabtrag. Der Fahrwagenstopper wird auf eine definierte Länge eingestellt.

Die Klebstoffmasse wird ca. 0,5 cm herausgedreht und mit einem Messer abgeschnitten. Damit wird gewährleistet, dass der Klebestift eine glatte Oberfläche hat und vollflächig auf dem Papier aufliegt. Vor der Prüfung wird der temperierte Klebestift gewogen, in die Vorrichtung des Fahrwagens montiert und eine definierte Länge aus der Hülse gedreht. Der zu prüfende Klebstoff wird mit Hilfe der Prüfvorrichtung unter definierten Bedingungen auf eine definierte Länge aufgetragen. Der Klebestift wird vorsichtig aus der Vorrichtung entnommen und zurückgewogen. Danach wird ein zweiter Papierstreifen (definierte Qualität) deckungsgleich mit Fingerdruck leicht angepresst und sofort eine definierte Zeit bei einem definierten Druck gepresst. Anschließend wird die Schälfestigkeit mit der Zugprüfmaschine gemessen. Bei einer konstanten Prüfgeschwindigkeit wird die mittlere Schälfestigkeit der Klebungen ermittelt.

### Auswertung:

Die Bestimmung wird vier- bzw. neunmal wiederholt und der Mittelwert der beim Schälversuch erreichten Kraft [N/mm] errechnet.

| | | | **Vergleichszusammensetzung** | **erfindungsgemäße Formulierung** |
|---|---|---|---|---|
| **Bsp.:** | [N/mm] | Auftrag 1x | 0,041 | 0,046 + alle Papierriss |

Die neue Formulierung ist auch im Vergleich zu marktüblichen Formulierungen auf PVP- und Stärkebasis deutlich stärker.

### Zugscherfestigkeit:

### Versuchsbeschreibung:

Es wird die Zugscherfestigkeit von Klebestiften bei Verklebung von Papier mit Papier (z. B. Tonkarton 300mg/m²) geprüft.

Der Klebstoff wird auf einer definierten Fläche mit einer definierten Klebstoffmenge aufgetragen und mit einem zweiten Prüfstreifen deckungsgleich verklebt. Nach ca. 30 Sekunden werden die Zugscherfestigkeiten mit der Zugprüfmaschine gemessen. Bei einer konstanten Prüfgeschwindigkeit wird die mittlere Zugscherfestigkeit bestimmt.

### Auswertung:

Die Messungen werden mehrfach wiederholt. Der Mittelwert der bei den Zugversuchen erreichten Kraft wird nach Abschluss der Prüfung aus dem Prüfprotokoll in N/mm² abgelesen.

| | | | **Vergleichszusammensetzung** | **erfindungsgemäße Formulierung** |
|---|---|---|---|---|
| **Bsp**. | [N/mm²] | Auftrag 1x | 0,38 | 0,564 + alle Papierriss |

Die neue Formulierung ist auch i. Vgl. zu den marktüblichen Produkten deutlich stärker.

### 5. Manuelle Langzeitverklebungen mit Klebestiften

### Versuchsdurchführung:

Es wird die Klebeleistung an verschiedenen Papierqualitäten nach definierten Zeiten bei unterschiedlichen Lagerbedingungen bestimmt (siehe untenstehende Tabelle).

Die Klebstoffmasse wird ca. 0,5 cm herausgedreht und mit einem Messer abgeschnitten, um eine glatte Oberfläche zu erhalten. Auf einem Prüfstreifen wird mittig 1- bis 3-mal von links nach rechts Klebstoff aufgetragen und ein zweiter Prüfstreifen deckungsgleich durch Fingerdruck angepresst. Je Papierqualität, je Lagerbedingung und je Lagerzeit werden fünf Verklebungen angelegt.

### Auswertung:

Die Prüflinge werden nach 1 Woche, 1 Monat, 3 und 6 Monaten gerissen. Es wird das Reißbild inkl. Klebefestigkeit der verklebten Materialien beurteilt.

| | | | **Vergleichszusammensetzung auf PVP-Basis (siehe S. 4)** | | | |
|---|---|---|---|---|---|---|
| | | | **(Festkörpergehalt: ca. 37 %)** | | | |
| **Material** | **Lagertemp.** | **Auftrag** | **1 Wo.** | **1 Mo.** | **3 Mo.** | **6 Mo.** |
| Kopierpapier | RT | 1x | 3 | 3 | 3 | 3 |
| | | 3x | 1 | 1 | 2 | 2 |
| | 40°C | 1x | 3 | 3 | 3 | 4 |
| | | 3x | 1 | 1 | 2 | 2 |
| | Klima 40°C/75% | 1x | 3 | 3 | 4 | 4 |
| | | 3x | 1 | 1 | 3 | 3 |
| | | | | | | |
| Karopapier | RT | 1x | 2 | 2 | 4 | 4 |
| | | 3x | 1 | 1 | 3 | 3 |
| | 40°C | 1x | 2 | 2 | 4 | 4 |
| | | 3x | 1 | 1 | 1 | 1 |
| | Klima 40°C/75% | 1x | 3 | 3 | 3 | 3 |
| | | 3x | 2 | 2 | 2 | 2 |
| | | | | | | |
| Bastelpappe | RT | 1x | 4 | 4 | 4 | 4 |
| | | 3x | 2 | 2 | 2 | 2 |
| | 40°C | 1x | 2 | 2 | 4 | 4 |
| | | 3x | 3 | 3 | 3 | 3 |
| | Klima 40°C/75% | 1x | 5 | 5 | 5 | 5 |
| | | 3x | 4 | 4 | 4 | 4 |
| | | | | | | |

| | | | **Erfindungsgemäße Formulierung (S. 4) (Festkörpergehalt: ca. 40 %)** | | | |
|---|---|---|---|---|---|---|
| **Material** | **Lager- temp.** | **Auftrag** | **1 Wo.** | **1 Mo.** | **3 Mo.** | **6 Mo.** |
| Kopierpapier | RT | 1x | 1 | 1 | 2 | 2 |
| | | 3x | 1 | 1 | 1 | 1 |
| | 40°C | 1x | 1 | 1 | 1 | 1 |
| | | 3x | 1 | 1 | 1 | 1 |
| | Klima 40°C/75% | 1x | 1 | 2 | 2 | 2 |
| | | 3x | 1 | 1 | 1 | 1 |
| | | | | | | |
| Karopapier | RT | 1x | 1 | 1 | 1 | 1 |
| | | 3x | 1 | 1 | 1 | 1 |
| | 40°C | 1x | 1 | 1 | 1 | 1 |
| | | 3x | 1 | 1 | 1 | 1 |
| | Klima 40°C/75% | 1x | 2 | 2 | 2 | 2 |
| | | 3x | 1 | 1 | 1 | 1 |
| | | | | | | |
| Bastelpappe | RT | 1x | 1 | 1 | 2 | 2 |
| | | 3x | 1 | 1 | 1 | 1 |
| | 40°C | 1x | 1 | 1 | 1 | 1 |
| | | 3x | 1 | 1 | 1 | 1 |
| | Klima 40°C/75% | 1x | 1 | 1 | 2 | 2 |
| | | 3x | 1 | 1 | 1 | 1 |
| | | | | | | |
| Foto in Fotoalbum | RT | 1x | 1 | 1 | | |
| | | 3x | 1 | 1 | | |
| | 40°C | 1x | 1 | 1 | | |
| | | 3x | 1 | 1 | | |
| | Klima 40°C/75% | 1x | 1 | 1 | | |
| | | 3x | 1 | 1 | | |

| | | | **Vergleichsprodukt auf Stärkebasis * (Festkörpergehalt: ca. 50 %)** | | | |
|---|---|---|---|---|---|---|
| **Material** | **Lagertemp.** | **Auftrag** | **1 Wo.** | **1 Mo.** | **3 Mo.** | **6 Mo.** |
| Kopierpapier | RT | 1x | 1 | 1 | 2 | 2 |
| | | 3x | 1 | 1 | 1 | 1 |
| | 40°C | 1x | 1 | 1 | 2 | 2 |
| | | 3x | 1 | 1 | 1 | 1 |
| | Klima 40°C/75% | 1x | 1 | 1 | 5 | 5 |
| | | 3x | 1 | 1 | 5 | 5 |
| | | | | | | |
| Karopapier | RT | 1x | 1 | 1 | 3 | 5 |
| | | 3x | 1 | 1 | 1 | 5 |
| | 40°C | 1x | 1 | 1 | 3 | 3 |
| | | 3x | 1 | 1 | 1 | 1 |
| | Klima 40°C/75% | 1x | 1 | 1 | 5 | 5 |
| | | 3x | 1 | 1 | 5 | 5 |
| | | | | | | |
| Bastelpappe | RT | 1x | 1 | 1 | 2 | 2 |
| | | 3x | 1 | 1 | 1 | 1 |
| | 40°C | 1x | 1 | 1 | 1 | 1 |
| | | 3x | 1 | 1 | 1 | 1 |
| | Klima 40°C/75% | 1x | 1 | 3 | 5 | 5 |
| | | 3x | 1 | 3 | 5 | 5 |
| | | | | | | |
| Foto in Fotoalbum | RT | 1x | 2 | 2 | | |
| | | 3x | 1 | 1 | | |
| | 40°C | 1x | 2 | 3 | | |
| | | 3x | 2 | 1 | | |
| | Klima | 1x | 2 | 2 | | |
| | 40°C/75% | 3x | 1 | 1 | | |

| | | | | | | |
|---|---|---|---|---|---|---|
| * Der Anteil an Stärke, Gylcerin, Wasser und Fettsäuren beträgt nur 90 Gew.-%. | | | | | | |

| | | | **Vergleichsprodukt 2 auf PVP-Basis (Festkörpergehalt: ca. 30 %)** | | | |
|---|---|---|---|---|---|---|
| **Material** | **Lager- temp.** | **Auftrag** | **1 Wo.** | **1 Mo.** | **3 Mo.** | **6 Mo.** |
| Kopierpapier | RT | 1x | 4 | 4 | 5 | 5 |
| | | 3x | 4 | 4 | 5 | 5 |
| | 40°C | 1x | 5 | 5 | 5 | 5 |
| | | 3x | 3 | 3 | 3 | 4 |
| | Klima 40°C/75% | 1x | 4 | 4 | 5 | 5 |
| | | 3x | 2 | 2 | 3 | 5 |
| | | | | | | |
| Karopapier | RT | 1x | 5 | 5 | 5 | 5 |
| | | 3x | 3 | 3 | 4 | 4 |
| | 40°C | 1x | 5 | 5 | 5 | 5 |
| | | 3x | 3 | 3 | 5 | 5 |
| | Klima 40°C/75% | 1x | 3 | 3 | 5 | 5 |
| | | 3x | 1 | 1 | 3 | 5 |
| | | | | | | |
| Bastelpappe | RT | 1x | 4 | 4 | 5 | 5 |
| | | 3x | 2 | 2 | 3 | 4 |
| | 40°C | 1x | 5 | 4 | 4 | 5 |
| | | 3x | 3 | 3 | 3 | 3 |
| | Klima 40°C/75% | 1x | 4 | 5 | 5 | 5 |
| | | 3x | 2 | 2 | 5 | 5 |
| | | | | | | |
| Foto in Fotoalbum | RT | 1x | 4 | 5 | | |
| | | 3x | 2 | 2 | | |
| | 40°C | 1x | 4 | 5 | | |
| | | 3x | 3 | 3 | | |
| | Klima 40°C/75% | 1x | 5 | 5 | | |
| | | 3x | 2 | 2 | | |

| | | | **Vergleichsprodukt 3 auf PVP-Basis (Festkörpergehalt: ca. 50 %)** | | | |
|---|---|---|---|---|---|---|
| **Material** | **Lager-temp.** | **Auftrag** | **1 Wo.** | **1 Mo.** | **3 Mo.** | **6 Mo.** |
| Kopierpapier | RT | 1x | 1 | 1 | 3 | 4 |
| | | 3x | 1 | 1 | 1 | 2 |
| | 40°C | 1x | 1 | 1 | 4 | 5 |
| | | 3x | 1 | 1 | 1 | 1 |
| | Klima 40°C/75% | 1x | 4 | 5 | 5 | 5 |
| | | 3x | 3 | 5 | 5 | 5 |
| | | | | | | |
| Karopapier | RT | 1x | 5 | 5 | 5 | 5 |
| | | 3x | 1 | 3 | 3 | 5 |
| | 40°C | 1x | 5 | 5 | 5 | 5 |
| | | 3x | 2 | 2 | 2 | 3 |
| | Klima 40°C/75% | 1x | 5 | 5 | 5 | 5 |
| | | 3x | 5 | 5 | 5 | 5 |
| | | | | | | |
| Bastelpappe | RT | 1x | 3 | 1 | 5 | 5 |
| | | 3x | 1 | 1 | 5 | 5 |
| | 40°C | 1x | 4 | 4 | 4 | 5 |
| | | 3x | 3 | 3 | 3 | 3 |
| | Klima 40°C/75% | 1x | 5 | 5 | 5 | 5 |
| | | 3x | 5 | 5 | 5 | 5 |

| | | | **Vergleichsprodukt 4 auf PVP-Basis (Festkörpergehalt: ca. 35 %)** | | | |
|---|---|---|---|---|---|---|
| **Material** | **Lager-temp.** | **Auftrag** | **1 Wo.** | **1 Mo.** | **3 Mo.** | **6 Mo.** |
| Kopierpapier | RT | 1x | 3 | 3 | 5 | 5 |
| | | 3x | 2 | 2 | 3 | 3 |
| | 40°C | 1x | 3 | 3 | 4 | 4 |
| | | 3x | 1 | 2 | 2 | 2 |
| | Klima 40°C/75% | 1x | 2 | 3 | 5 | 5 |
| | | 3x | 1 | 1 | 2 | 2 |
| | | | | | | |
| Karopapier | RT | 1x | 3 | 3 | 4 | 5 |
| | | 3x | 1 | 3 | 4 | 4 |
| | 40°C | 1x | 4 | 4 | 5 | 5 |
| | | 3x | 1 | 1 | 2 | 2 |
| | Klima 40°C/75% | 1x | 1 | 2 | 3 | 3 |
| | | 3x | 1 | 1 | 1 | 1 |
| | | | | | | |
| Bastelpappe | RT | 1x | 4 | 4 | 5 | 5 |
| | | 3x | 1 | 1 | 3 | 3 |
| | 40°C | 1x | 4 | 4 | 4 | 4 |
| | | 3x | 2 | 2 | 2 | 2 |
| | Klima 40°C/75% | 1x | 3 | 5 | 5 | 5 |
| | | 3x | 2 | 2 | 2 | 2 |

| | | | | | | |
|---|---|---|---|---|---|---|
| 1 Papierriss 2 Faserriss bis Papierriss 3 teilweise Faserriss bis Papierriss bis Haftung 4 Haftung und teilweise Faserriss bis Papierriss 5 Haftung bis fällt beim Anfassen auseinander 6 keine Haftung - bereits auseinander gefallen | | | | | | |

Wie insbesondere ein Vergleich der erfindungsgemäßen Formulierung und des Vergleichsprodukts auf Stärkebasis zeigt, hat die erfindungsgemäße Formulierung mit einem Gehalt von Wasser, Stärke, Glycerin und Fettsäure von 98 Gew.-% bessere Eigenschaften als das Vergleichsprodukt, bei dem dieser Wert nur 90 Gew.-% beträgt.

Insgesamt ist zu sagen, dass die erfindungsgemäße Klebstoffzusammensetzung stärker und schneller klebt, ein perfektes Gleitverhalten auf Papier zeigt, dauerhaft und äußerst effizient ist. Zudem ist die erfindungsgemäße Klebstoffzusammensetzung vorzugsweise absolut lösungsmittelfrei und frei von kritischen Inhaltsstoffen. Zudem ist die erfindungsgemäße Klebstoffzusammensetzung verbraucherfreundlich, da eine einfache und verbraucherfreundliche Handhabung, Sauberkeit, gleichmäßiger Klebstoffauftrag, kaum Klümpchenbildung und ein sehr gutes und angenehmes Gleitverhalten gegeben ist. Die erfindungsgemäße Klebstoffmischung basiert auf natürlichen Inhaltsstoffen und zeichnet sich durch ausgezeichnete Produkteigenschaften und Nachhaltigkeit aus.

## Patentansprüche

1. Klebstoffzusammensetzung, **dadurch gekennzeichnet, dass** sie einen Anteil an Wasser, Stärke und/oder Stärkederivaten, Glycerin und mindestens einer Fettsäure und/oder eines Salzes einer Fettsäure von mindestens 98 Gew.-% aufweist, wobei der Anteil an nicht verdampfbaren Bestandteilen, nämlich der Anteil an Stärke und/oder Stärkederivaten, Fettsäure und/oder Fettsäuresalz und Glycerin 40 Gew.-% beträgt.

2. Klebstoffzusammensetzung nach Anspruch 1, **dadurch gekennzeichnet, dass** sie im Wesentlichen frei von organischen Lösungsmitteln, insbesondere frei von Lösungsmitteln mit einem Siedepunkt von unter 200 °C ist.

3. Klebstoffzusammensetzung nach einem der Ansprüche 1 oder 2, **dadurch gekennzeichnet, dass** sie frei von Polyvinylpyrrolidon, Propylenglycol und Caprolactam ist.

4. Klebstoffzusammensetzung nach einem der vorhergehenden Ansprüche, **dadurch gekennzeichnet, dass** sie Wasser mit einem Anteil von 60 Gew.-%, Stärke und/oder Stärkederivate mit einem Anteil von 10 - 40 Gew.-%, Glycerin mit einem Anteil von 1 - 20 Gew.-% und Fettsäure und/oder Salz einer Fettsäure mit einem Anteil von 2 - 20 Gew.-% enthält.

5. Klebstoffzusammensetzung nach einem der vorhergehenden Ansprüche, **dadurch gekennzeichnet, dass** sie Wasser mit einem Anteil von 60 Gew. Stärke und/oder Stärkederivate mit einem Anteil von 20 - 25 Gew.-%, insbesondere von 23 Gew.-%, Glycerin mit einem Anteil von 5 - 15 Gew.-%, insbesondere von 10 Gew.-% und Fettsäure und/oder Salz einer Fettsäure mit einem Anteil von 2 - 8 Gew.-%, insbesondere von 5 Gew.-% enthält.

6. Klebstoffzusammensetzung nach einem der vorhergehenden Ansprüche, **dadurch gekennzeichnet, dass** sie als Stärke Kartoffel- und/oder Maisstärke enthält.

7. Klebstoffzusammensetzung nach einem der vorhergehenden Ansprüche, **dadurch gekennzeichnet, dass** sie Dextrine und/oder stärkebasierende Zuckerstoffe enthält.

8. Klebstoffzusammensetzung nach einem der vorhergehenden Ansprüche, **dadurch gekennzeichnet, dass** die mindestens eine Fettsäure eine C₁₄- oder C₁₆-Fettsäure ist.

9. Klebstoffzusammensetzung nach einem der vorhergehenden Ansprüche, **dadurch gekennzeichnet, dass** die mindestens eine Fettsäure auf pflanzlicher Basis, insbesondere aus Rapsöl, Sonnenblumenöl, Leinöl, Senföl, Olivenöl, Erdnussöl, Palmöl, Palmkernöl, Traubenkernöl, Kürbiskernöl, Sojaöl, Kokosöl, Avocadoöl, Mandelöl, Distelöl, Rizinusöl und/oder Thymianöl gewonnen wird.

10. Klebstoffzusammensetzung nach einem der vorhergehenden Ansprüche, **dadurch gekennzeichnet, dass** sie mindestens eines aus der Gruppe von Parfümölen, insbesondere Parfümöle aus Blüten, Früchten, Hölzern und/oder Gewürzen, Naturfarbstoffen, insbesondere Naturfarbstoffe aus Pflanzen, und natürlichen Konservierungsstoffen, insbesondere Ascorbinsäure und/oder ätherische Öle enthält.

11. Klebstoffzusammensetzung nach einem der vorhergehenden Ansprüche, **dadurch gekennzeichnet, dass** mindestens ein pH-Indikator, insbesondere ein pH-Indikator mit einem Umschlagsbereich von pH 7 bis 9, vorzugsweise mit einem Anteil von weniger als 0,1 Gew.-% enthalten ist.

12. Klebestift, enthaltend eine Klebstoffzusammensetzung nach einem der Ansprüche 1 bis 11.

## Claims

1. A glue composition, **characterized in that** the glue composition has a proportion of water, starch and/or starch derivatives, glycerin and at least one fatty acid and/or at least one salt of a fatty acid of at least 98 % by weight, said proportion of non-evaporable components, namely the proportion of starch and/or starch derivatives, fatty acid and/or fatty acid salt and glycerin being 40 % by weight.

2. The glue composition according to claim 1, **characterized in that** the glue composition is essentially free of organic solvents, in particular free of solvents having a boiling point below 200° C.

3. The glue composition according to claim 1 or 2, **characterized in that** the glue composition is free of polyvinylpyrrolidone, propylene glycol and caprolactam.

4. The glue composition according to any one of the preceding claims, **characterized in that** the glue composition contains water at a proportion of 60 % by weight, starch and/or starch derivatives at a proportion of 10 - 40 % by weight, glycerin at a proportion of 1 - 20 % by weight, and fatty acid and/or salt of a fatty acid at a proportion of 2 - 20 % by weight.

5. The glue composition according to any one of the preceding claims, **characterized in that** the glue composition contains water at a proportion of 60 % by weight, starch and/or starch derivatives at a proportion of 20 - 25 % by weight, in particular 23 % by weight, glycerin at a proportion of 5 - 15 % by weight, in particular 10 % by weight, and fatty acid and/or salt of a fatty acid at a proportion of 2 - 8 % by weight, in particular 5 % by weight.

6. The glue composition according to any one of the preceding claims, **characterized in that** the glue composition contains potato starch and/or corn starch as its starch.

7. The glue composition according to any one of the preceding claims, **characterized in that** the glue composition contains dextrin and/or starch-based sugars.

8. The glue composition according to any one of the preceding claims, **characterized in that** the at least one fatty acid is a C₁₄ or C₁₆ fatty acid.

9. The glue composition according to any one of the preceding claims, **characterized in that** the at least one fatty acid is derived on a plant basis, in particular from canola oil, sunflower seed oil, linseed oil, mustard oil, olive oil, peanut oil, palm oil, palm kernel oil, grape seed oil, pumpkin seed oil, soybean oil, coconut oil, avocado oil, almond oil, safflower seed oil, castor oil and/or thyme oil.

10. The glue composition according to any one of the preceding claims, **characterized in that** the glue composition contains at least one of the group of perfume oils, in particular perfume oils derived from blossoms, fruit, timbers and/or spices, natural dyes, in particular plant-derived natural dyes, and natural preservatives, in particular ascorbic acid and/or essential oils.

11. The glue composition according to any one of the preceding claims, **characterized in that** the glue composition contains at least one pH indicator, in particular a pH indicator having a transition range from pH 7 to 9, preferably having a proportion of less than 0.1 % by weight.

12. A glue stick, containing a glue composition according to any one of the claims 1 to 12.

## Revendications

1. Composition de colle, **caractérisée en ce que** la composition de colle a une proportion de l'eau, de l'amidon et/ou des dérivés d'amidon, de la glycérine et d'au moins un acide gras et/ou d'au moins un sel d'un acide gras d'au moins 98 % en poids, ladite proportion des composants non-évaporable, en effet la proportion de l'amidon et/ou des dérivés d'amidon, de l'acide gras et/ou du sel d'acide gras et de la glycérine étant 40 % en poids.

2. Composition de colle selon la revendication 1, **caractérisée en ce que** la composition de colle est essentiellement sans des solvants organique, notamment sans des solvants ayant un point d'ébullition inférieure à 200° C.

3. Composition de colle selon la revendication 1 ou 2, **caractérisée en ce que** la composition de colle est sans de la polyvinylpyrrolidone, du propylène glycol et du caprolactame.

4. Composition de colle selon l'une quelconque des revendications précédentes, **caractérisée en ce que** la composition de colle contient de l'eau ayant une proportion de 60 % en poids, de l'amidon et/ou des dérivés d'amidon ayant une proportion de 10 - 40 % en poids, de la glycérine ayant une proportion de 1 - 20 % en poids et de l'acide gras et/ou du sels d'un acide gras ayant une proportion de 2 - 20 % en poids.

5. Composition de colle selon l'une quelconque des revendications précédentes, **caractérisée en ce que** la composition de colle contient de l'eau ayant une proportion de 60 % en poids, de l'amidon et/ou des dérivés d'amidon ayant une proportion de 20 - 25 % en poids, notamment 23 % en poids, de la glycérine ayant une proportion de 5 - 15 % en poids, notamment de 10 % en poids, et de l'acide gras et/ou du sel d'un acide gras ayant une proportion de 2 - 8 % en poids, notamment 5 % en poids.

6. Composition de colle selon l'une quelconque des revendications précédentes, **caractérisée en ce que** la composition de colle contient de la fécule de pomme de terre et/ou de l'amidon de maïs comme amidon.

7. Composition de colle selon l'une quelconque des revendications précédentes, **caractérisée en ce que** la composition de colle contient de la dextrine et/ou des sucres à base d'amidon.

8. Composition de colle selon l'une quelconque des revendications précédentes, **caractérisée en ce que** l'au moins un acide gras est un acide gras à 14 ou 16 atomes de carbone.

9. Composition de colle selon l'une quelconque des revendications précédentes, **caractérisée en ce que** l'au moins un acide gras est dérivé à base de plantes, notamment de l'huile de colza, de l'huile de tournesol, de l'huile de lin, de l'huile de moutarde, de l'huile d'olive, de l'huile d'arachides, de l'huile de palme, de l'huile de palmiste, de l'huile de pépins de raisin, de l'huile de graines de courge, de l'huile de soja, de l'huile de coco, de l'huile d'avocat, de l'huile d'amande, de l'huile de carthame, de l'huile de ricin et/ou de l'huile de thyme.

10. Composition de colle selon l'une quelconque des revendications précédentes, **caractérisée en ce que** la composition de colle contient au moins un ingrédient du groupe constitué par des huiles parfumées, notamment des huiles parfumées dérivées des fleurs, des fruits, des bois et/ou des épices, des colorants naturels, notamment des colorants naturels dérivés des plants, et des conservateurs naturels, notamment de l'acide ascorbique et/ou des huiles essentielles.

11. Composition de colle selon l'une quelconque des revendications précédentes, **caractérisée en ce que** la composition de colle contient au moins un indicateur de pH, notamment un indicateur de pH ayant une plage de transition de pH de 7 à 9, en préférence ayant une proportion inférieure à 0,1 % en poids.

12. Bâton de colle, contenant une composition de colle selon l'une quelconque des revendications 1 à 11.
